(19) Europäisches Patentamt
European Patent Office
Office européen des brevets

(11) Publication number: **0 448 359 A1**

# (12) EUROPEAN PATENT APPLICATION

(21) Application number: **91302379.2**

(22) Date of filing: **19.03.91**

(51) Int. Cl.[5]: **C08G 73/10,** C08G 77/42, H01B 3/30, H01L 23/29

(30) Priority: **23.03.90 JP 73971/90**

(43) Date of publication of application: **25.09.91 Bulletin 91/39**

(84) Designated Contracting States: **DE FR GB**

(71) Applicant: **SHIN-ETSU CHEMICAL CO., LTD.**
**6-1, Ohtemachi 2-chome**
**Chiyoda-ku Tokyo (JP)**

(72) Inventor: **Okinoshima, Hiroshige**
**19-1 Isobe 3-chome**
**Annaka-shi, Gunma-ken (JP)**
Inventor: **Kato, Hideto**
**179-5, Kaminamie-machi**
**Takasaki-shi, Gunma-ken (JP)**

(74) Representative: **Stoner, Gerard Patrick et al**
**Mewburn Ellis 2 Cursitor Street**
**London EC4A 1BQ (GB)**

## (54) Curable resins, their preparation, and protective coatings for electronic parts.

(57) A curable resin comprising a resin of the formula

(I):

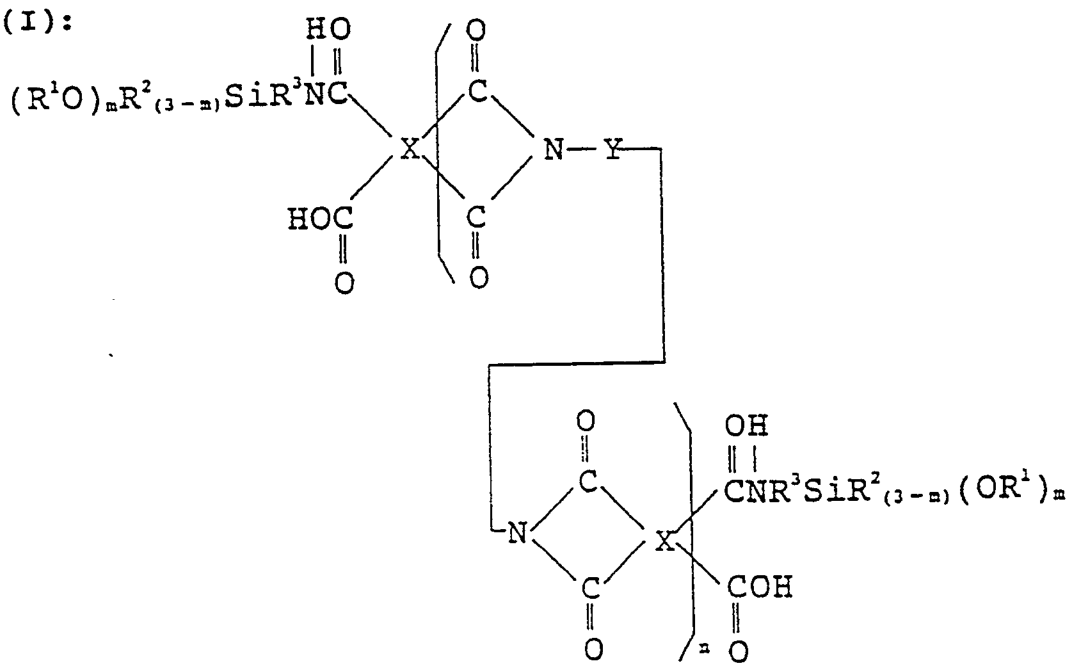

....(I)

wherein $R^1$ and $R^2$ each are substituted or unsubstituted monovalent hydrocarbon group having 1 to 10 carbon atoms, $R^3$ is a divalent organic group having 1 to 10 carbon atoms, X is a tetravalent organic group having an aromatic ring, Y is a divalent organic group, m is an integer of 1 to 3, and n is an integer of at least 1. The resin is prepared by reacting a polyimide with an aminosilicon compound and can be cured through relatively mild heating into coatings having enhanced substrate adherence and solvent resistance.

EP 0 448 359 A1

# CURABLE RESINS, THEIR PREPARATION, AND PROTECTIVE COATINGS FOR ELECTRONIC PARTS

This invention relates to curable resins of the polyimide resin type suitable for use in forming insulating protective coatings on electronic parts, methods for preparing the resins, and electronic part protective coatings obtained by curing the resins.

Polyimide resins having improved electrical and mechanical properties have been utilized as insulating protective coatings for electronic parts. Since most polyimide resins are insoluble in organic solvents, polyimide protective coatings are generally prepared by using a polyamic acid solution which is a polyimide precursor, and applying the solution to substrates, followed by heat curing. This conventional approach, however, has several problems in that a polyamic acid solution is rather difficult to apply because of its high viscosity, heat curing requires high temperatures in excess of 300°C, and the resulting polyimide coatings show poor adherence to such substrates as nickel, aluminum, silicon, and silicon oxide films. A number of solutions to these problems have been proposed.

For improving the adherence to substrates, United States Patent No. 3,325,450 and Japanese Patent Publication No. 7213/1984 propose polyimide - siloxane copolymers in which a diamine component, which is a reactant for forming polyimide, is partially replaced by a siloxane - containing diamine. Also, United States Patent Nos. 3,950,308 and 3,926,911 and Japanese Patent Publication No. 29510/1989 disclose a method for mixing or reacting a polyamic acid or polyimide precursor with a silane having an amino group or acid anhydride group. However, the former method has the problem that copolymers with an increased content of siloxane show poor heat resistance. In the latter method, the polyamic acid solution experiences a substantial loss of shelf stability with an increasing amount of silane added.

In order to avoid the heat treatment at 300°C or more which has been necessary in curing polyamic acid into polyimide films, it was proposed to form films directly from a polyimide resin by dissolving the polyimide resin itself in a suitable solvent and causing the solvent to volatilize at relatively low temperatures. See Japanese Patent Publication Nos. 30319/1977 and 83228/1986 and United States Patent No. 4,588,804. These methods yield polyimide resin films which have poor solvent resistance by nature and can lead to unacceptable problems in practical applications.

Clearly, it would be desirable to provide a new and improved curable resin of the polyimide resin type which could be dissolved in a solvent to form a solution which is less viscous, easy to apply, and shelf stable, and could cure at relatively low temperatures to films having improved heat resistance, mechanical strength, electrical properties, solvent resistance, and substrate adherence.

The problem addressed herein is generally to provide novel curable resins, methods by which they are prepared, and their use in making protective coatings for electronic parts. Preferably, the resins provide one or more, most preferably all, of the improved properties mentioned above.

In the invention,we provide a polyimide resin type curable resin comprising a resin containing imide and alkoxysilyl groups represented by the following structural formula

(I):

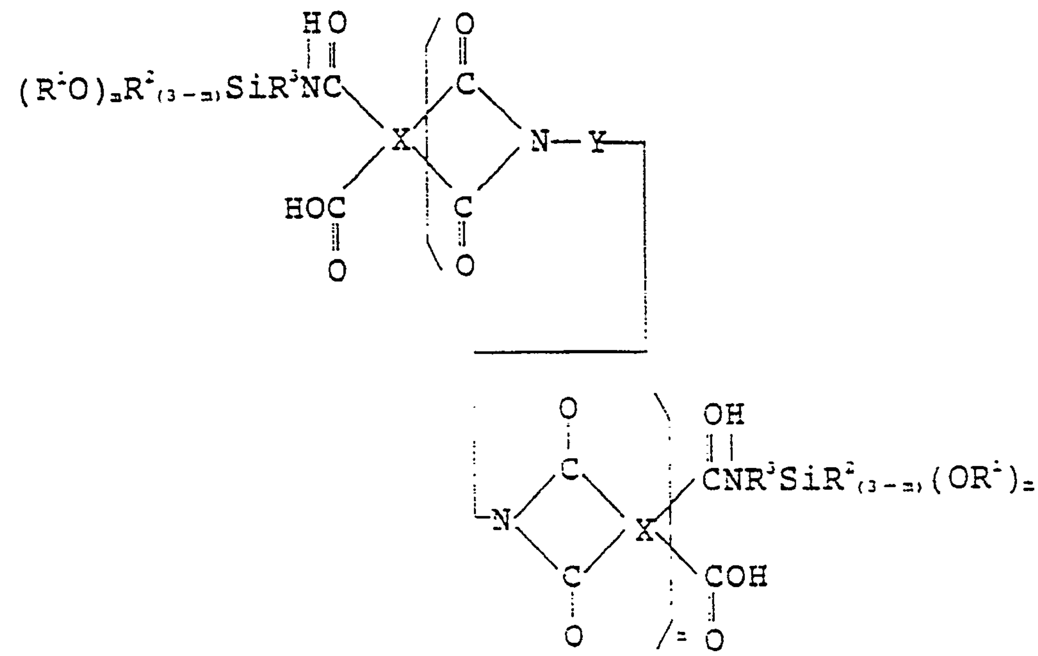

....(I)

wherein $R^1$ and $R^2$ are each a substituted or unsubstituted monovalent hydrocarbon group having 1 to 10 carbon atoms, $R^3$ is a divalent organic group having 1 to 10 carbon atoms, X is a tetravalent organic group having an aromatic ring, Y is a divalent organic group, m is an integer of 1 to 3, and n is an integer of at least 1. Such a curable resin is obtainable by reacting a polyimide of formula (II):

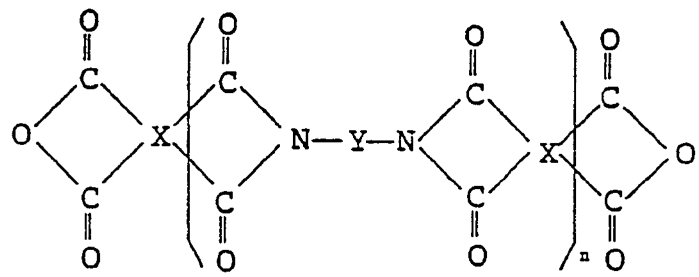

....(II)

wherein X, Y, and n are as defined above with an aminosilicon compound of the following structural formula (III):

$$(R^1O)_mR^2_{(3-m)}SiR^3NH_2 \quad \text{(III)}$$

wherein $R^1$, $R^2$, $R^3$, and m are as defined above. We have prepared such resins which can be dissolved in a solvent to form a varnish which is relatively low in viscosity and thus easy to apply or coat. This varnish is also shelf stable and after coating, can be readily cured into films by heating at relatively low temperatures below 300°C. The cured coatings firmly adhere to the underlying substrates, and they possess not only improved heat resistance, mechanical strength, and electrical properties, but also solvent resistance so that they are useful as protective coatings for electronic pars.

Therefore, according to the present invention, there are provided a curable resin having formula (I), a method for preparing a curable resin having formula (I) by reacting a polyimide of formula (II) with an aminosilicon compound of formula (III), and a protective coating for electronic parts, obtained by curing the curable resin.

DESCRIPTION OF PREFERRED AND OPTIONAL FEATURES

The polyimide resin type curable resin of the present invention is represented by the following structural formula (I).

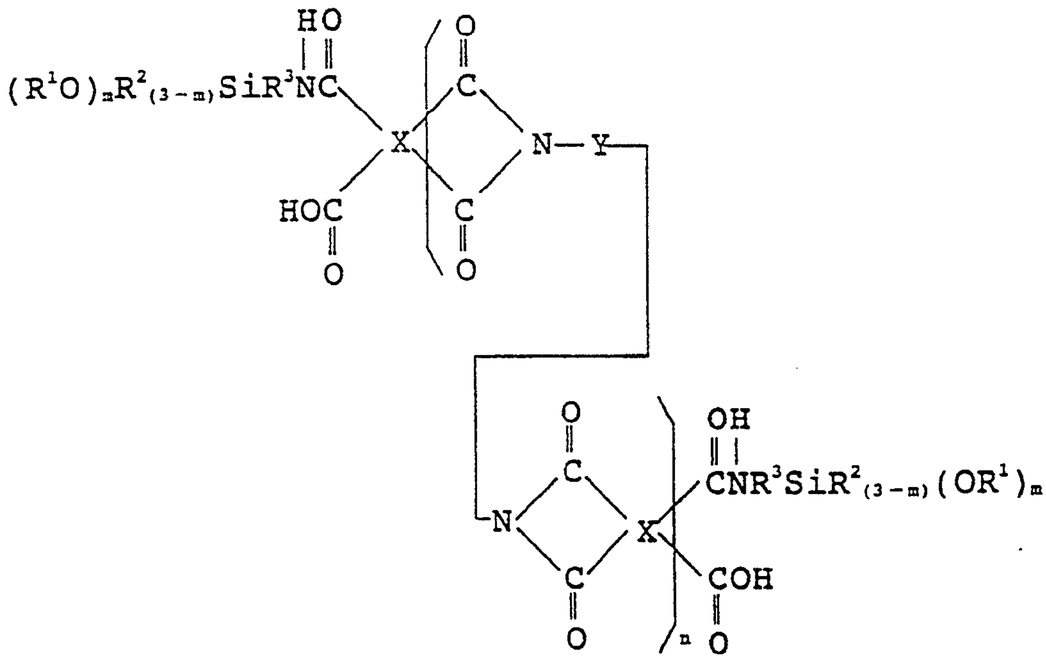

....(I)

In formula (I), $R^1$ and $R^2$, which may be the same or different, are substituted or unsubstituted monovalent hydrocarbon groups having 1 to 10 carbon atoms,

$R^3$ is a divalent organic group having 1 to 8 carbon atoms,

X is a tetravalent organic group having an aromatic ring,

Y is a divalent organic group,

letter m is an integer of 1 to 3, and

n is an integer of at least 1, preferably 1 to 100 for ease of application and increased adherence.

Preferably, X is at least one tetravalent organic group selected from:

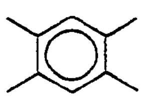
,
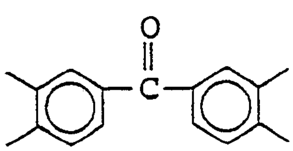
,
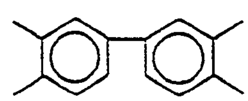
,

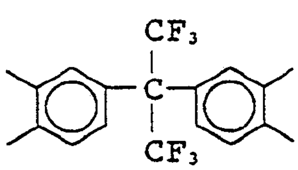
,
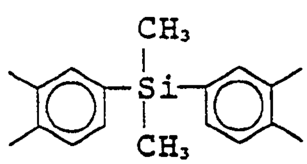
and

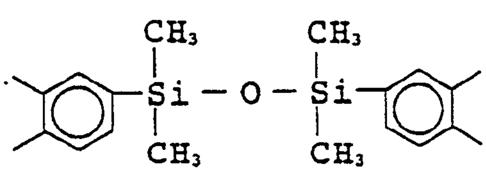
.

Preferably, Y is a divalent organic group having 1 to 4, preferably 1 to 2 benzene rings and 6 to 36, preferably 6 to 30 carbon atoms, or a divalent organic group having the following formula (1) or (2):

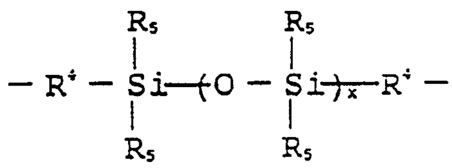

.....(1)

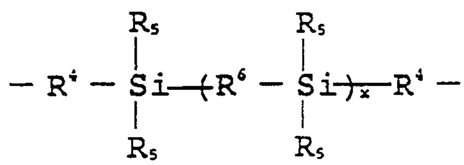

.....(2)

In the above formulae (1) and (2), $R^4$ is a divalent organic group having 1 to 10, preferably 1 to 8 carbon atoms such as an alkylene group, phenylene group or

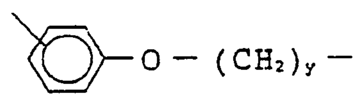

in which y is an integer of 1 to 3. $R^5$ is a substituted or unsubstituted monovalent hydrocarbon group having 1 to 10 carbon atoms as exemplified in $R^3$, preferably an alkyl group having 1 to 8 carbon atoms or a phenyl group. $R^6$ is a divalent organic group having 1 to 6, preferably 1 to 4 carbon atoms such as an alkylene group or a phenylene group. x is an integer of 1 to 10.

The curable resin (I) can be formed by reacting a polyimide of the following structural formula ( II ):

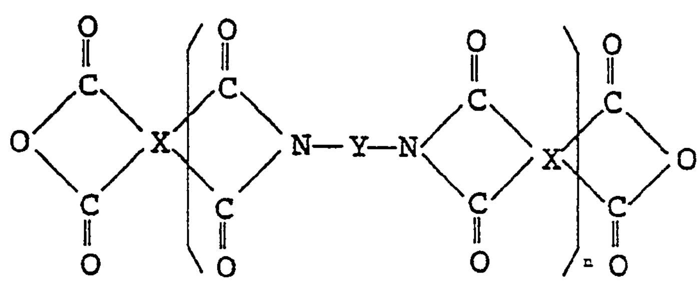

....( II )

wherein X, Y, and n are as defined above with an aminosilicon compound of the following structural formula ( III ):

$$(R^1O)_mR^2_{(3-m)}SiR^3NH_2 \quad (III)$$

wherein $R^1$, $R^2$, $R^3$, and m are as defined above.

The polyimide of formula ( II ) can be prepared by reacting a tetracarboxylic dianhydride of the following structural formula ( IV ):

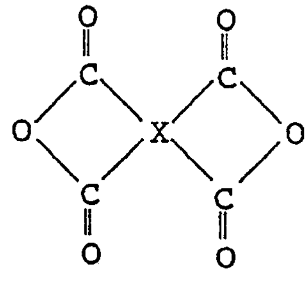

....( IV )

wherein X is as defined above with a diamine of the following structural formula (V):

$$H_2N - Y - NH_2 \quad (V)$$

wherein Y is as defined above in such a proportion that (n+1) molecules of the tetracarboxylic dianhydride of formula ( IV ) are available per n molecules of the diamine of formula (V) wherein n is an integer of at least 1, thereby forming a polyamic acid of the following structural formula ( VI ), followed by dehydration in a conventional manner. Their reaction scheme is shown below.

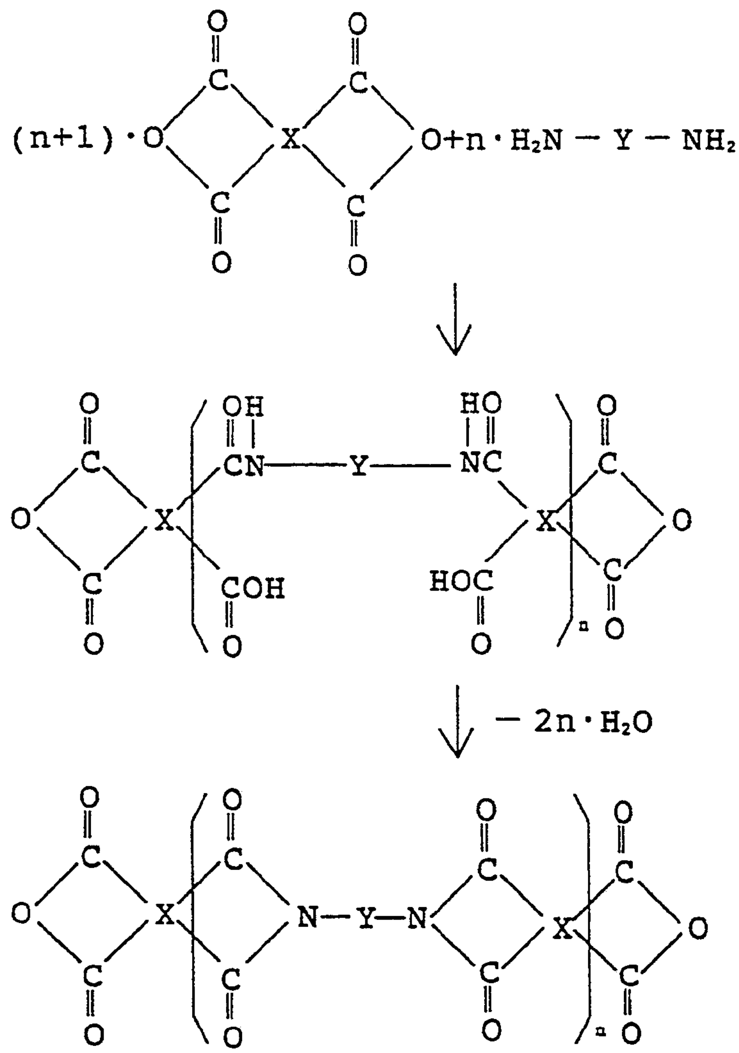


....( VI )

....( II )

In the foregoing formulae, X is a tetravalent organic group having an aromatic ring, which originates from the tetracarboxylic dianhydride of formula ( IV ) which is used as a starting reactant to form the polyimide of formula ( II ).

The acid dianhydride of formula ( IV ) is often selected from, but not limited to, pyromellitic dianhydride where X is

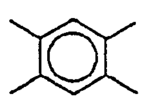
,

benzophenonetetracarboxylic dianhydride where X is

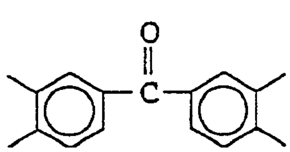
,

3,3 ',4,4 ' - biphenyltetracarboxylic dianhydride where X is

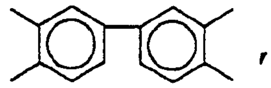

2,2 - bis(3,4 - benzenedicarboxylic anhydride) perfluoropropane where X is

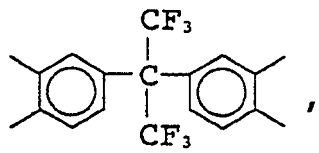

bis(3,4 - dicarboxyphenyl)dimethylsilane dianhyd -ride where X is

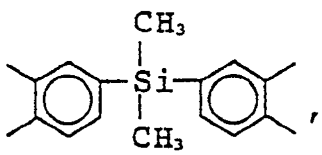

and 1,3 - bis(3,4 - dicarboxyphenyl) - 1,1,3,3 -tetramethyldisiloxane dianydride where X is

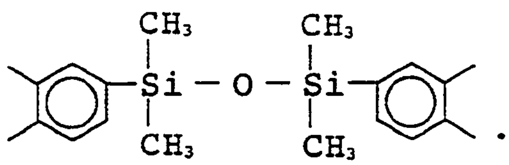

X may be one or a mixture of the foregoing members. Therefore, when a tetracarboxylic dianhydride of formula ( IV ) is reacted with a diamine of formula (V) to form a polyamide of formula ( II ), either a single dianhydride or a mixture of two or more dianhydrides may be used.

In the foregoing formulae, Y is a divalent organic group, which originates from the diamine of formula (V) which is used as a starting reactant to form the polyimide of formula ( II ). Illustrative, non - limiting examples of the diamine of formula (V) include aromatic ring -containing diamines, for example,

p - phenylenediamine,
m - phenylenediamine,
4,4 ' - diaminodiphenylmethane,
4,4 ' - diaminodiphenyl ether,
2,2 ' - bis(4 - aminophenyl)propane,
4,4 ' - diaminodiphenyl sulfone,
4,4 ' - diaminodiphenyl sulfide,
1,4 - bis(3 - aminophenoxy)benzene,
1,4 - bis(4 - aminophenoxy)benzene,
1,4 - bis(m - aminophenylsulfonyl)benzene,
1,4 - bis(p - aminophenylsulfonyl)benzene,
1,4 - bis(m - aminophenylthioether)benzene,
1,4 - bis(p - aminophenylthioether)benzene,
2,2 - bis[4 - (4 - aminophenoxy)phenyl] -propane,
2,2 - bis[3 - methyl - 4 - (4 - aminophenoxy) -phenyl]propane,
2,2 - bis[3 - chloro - 4 - (4 - aminophenoxy) -phenyl]propane,
1,1 - bis[4 - (4 - aminophenoxy)phenyl] -ethane,
1,1 - bis[3 - methyl - 4 - (4 - aminophenoxy) -phenyl]ethane,
1,1 - bis[3 - chloro - 4 - (4 - aminophenoxy) -phenyl]ethane,
1,1 - bis[3,5 - dimethyl - 4 - (4 - amino -phenoxy)phenyl]methane,

bis[4 - (4 - aminophenoxy)phenyl]methane,
bis[3 - methyl - 4 - (4 - amino -phenoxy)phenyl]methane,
bis[3 - chloro - 4 - (4 - amino -phenoxy)phenyl]methane,
bis[3,5 - dimethyl - 4 - (4 - amino -phenoxy)phenyl]methane,
bis[4 - (4 - aminophenoxy)phenyl]sulfone, etc., and silicone diamines as shown below.

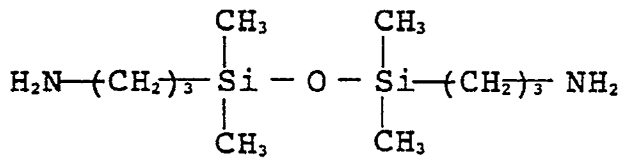
,

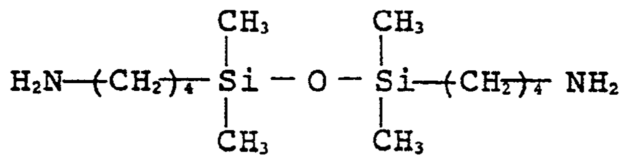
,

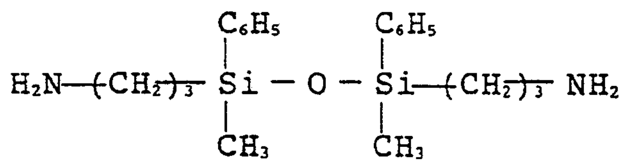
,

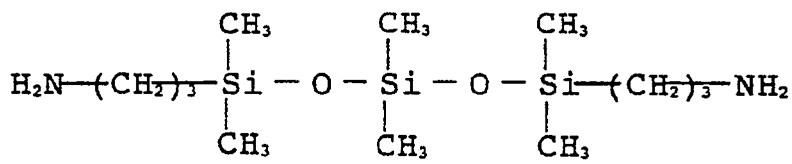
,

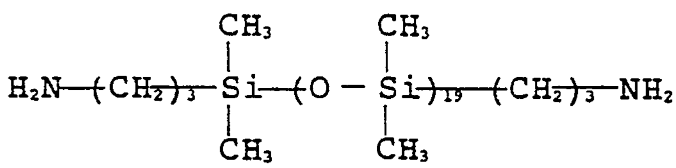
,

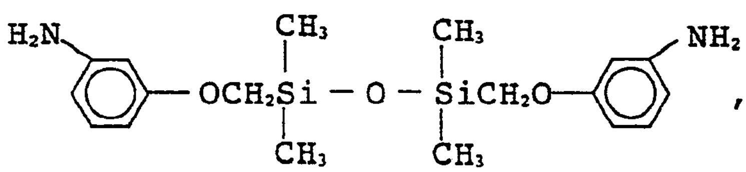
,

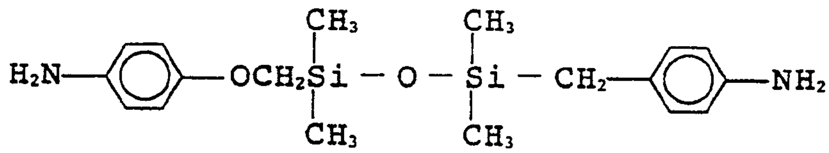 ,

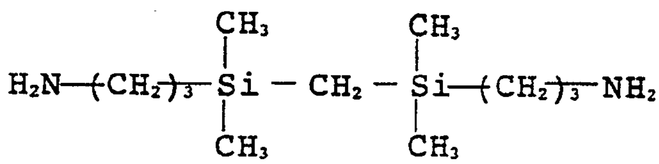 ,

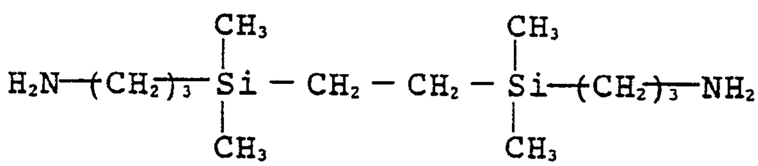 ,

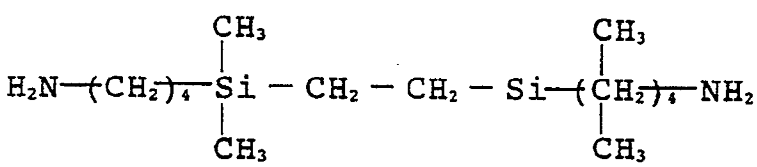 ,

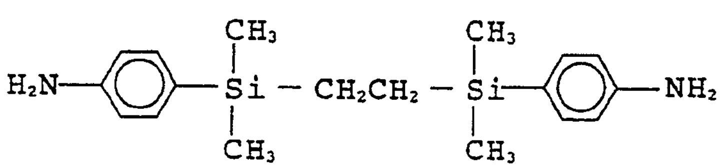 ,

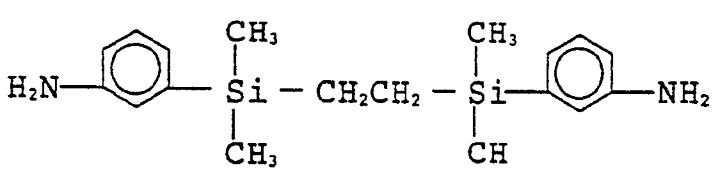 ,

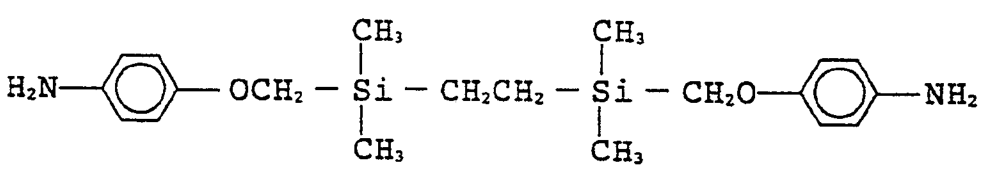 ,

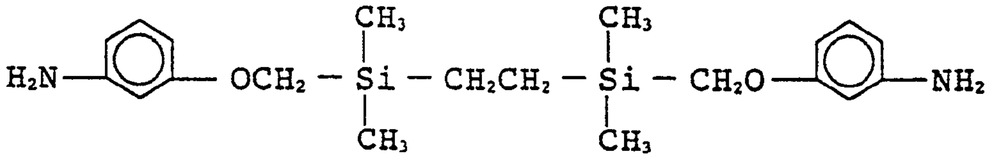

,

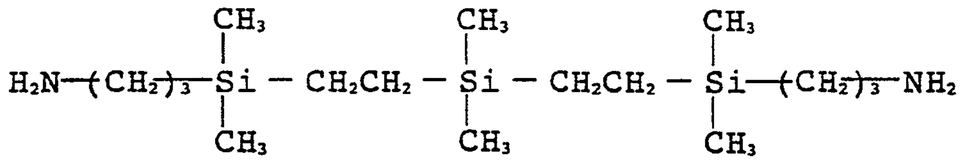

,

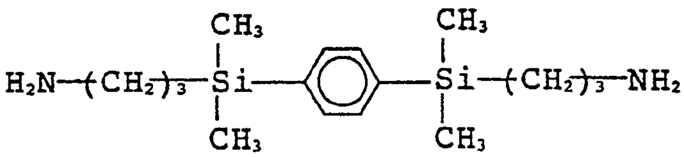

Y may be one or a mixture of the foregoing diamine residues. Therefore, either a single diamine or a mixture of two or more diamines may be used in producing the polyimide of formula ( II ).

The aminosilicon compound used herein is of the following structural formula ( III ).

$$(R^1O)_mR^2_{(3-m)}SiR^3NH_2 \quad (III)$$

In formula ( III ), $R^1$ and $R^2$, which may be the same or different, are substituted or unsubstituted monovalent hydrocarbon group having 1 to 10 carbon atoms, preferably 1 to 6 carbon atoms, for example, alkyl groups such as methyl, ethyl, propyl and butyl groups; alkenyl groups such as vinyl, allyl and butenyl groups; aryl groups such as phenyl and tolyl groups; and substituted ones of these groups wherein some or all of the hydrogen atoms attached to carbon atoms are replaced by halogen atoms, cyano groups, and alkoxy groups, for example, chloromethyl, chloropropyl, 3,3, - trifluoro -propyl, 2 - cyanoethyl, methoxyethyl, and ethoxyethyl groups. Among these, alkyl groups and alkoxy - substituted alkyl groups are preferred for $R^1$ and substituted or unsubstituted alkyl and aryl groups are preferred for $R^2$.

$R^3$ is a divalent organic group, more specifically, a substituted or unsubstituted divalent hydrocarbon group having 1 to 10, preferably 1 to 8 carbon atoms, for example,

alkylene groups such as $-(CH_2)_p-$ and 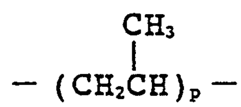 ,

arylene groups such as 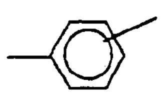 and 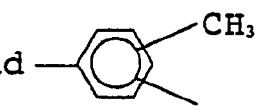 ,

substituted alkylene groups such as oxyalkylene, thio - alkylene, and iminoalkylene groups, as

represented by $-(CH_2)_p-O-(CH_2)_q-$ ,

$-(CH_2)_p-S-(CH_2)_q-$ , and 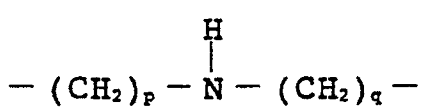 ,

and substituted alkylene arylene groups such as oxyalkylene arylene and iminoalkylene arylene groups, as rep-

resented by

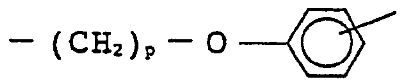 and 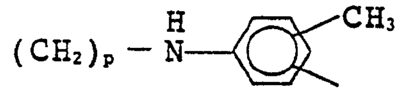

wherein p and q are integers of 1 to 3.

Illustrative, non - limiting examples of the aminosilicon compound of formula ( III ) are given below.

$(CH_3O)_3Si-(CH_2)_3-NH_2$ , 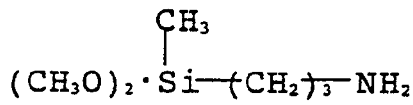 ,

$(C_2H_5O)_3Si-(CH_2)_3-NH_2$ , 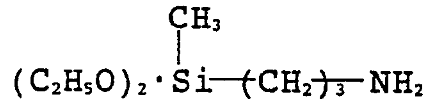

$(CH_3OC_2H_4O)_3Si-(CH_2)_3-NH_2$ , $(C_2H_5OC_2H_4O)_3Si-(CH_2)_3-NH_2$,

$(CH_3O)_3\cdot Si-(CH_2)_3-NH-(CH_2)_2-NH_2$ ,

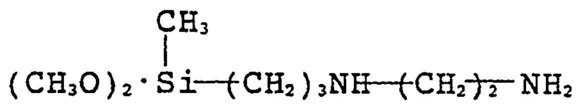 ,

$(n-C_3H_7O)_3\cdot Si-(CH_2)_3-NH_2$ ,

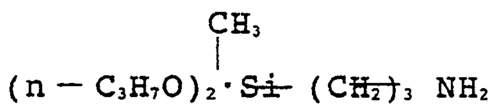 ,

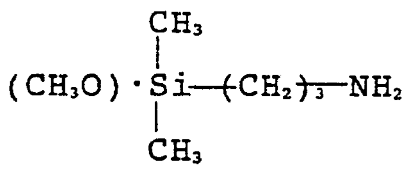 , 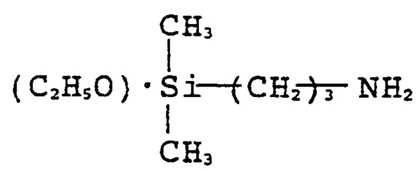 ,

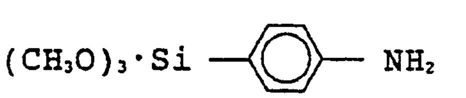 ,

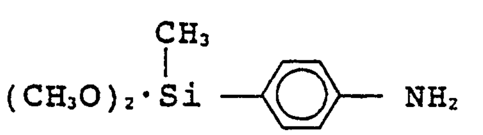 ,

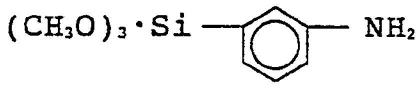
,

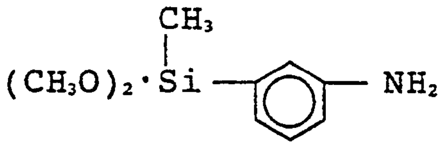
,

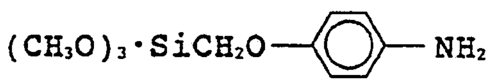
,

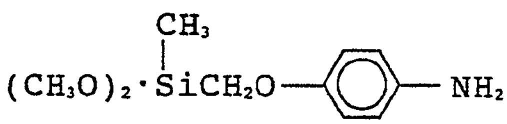
,

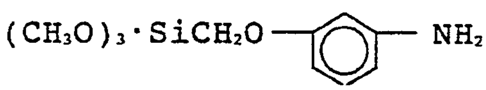
,

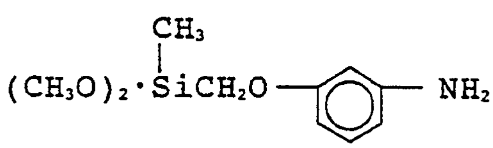
,

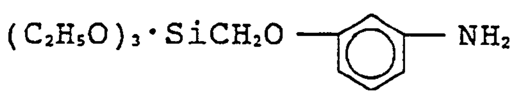
,

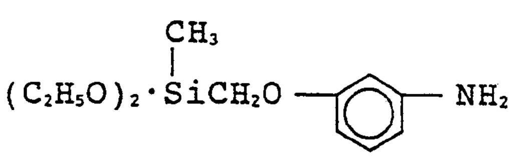
,

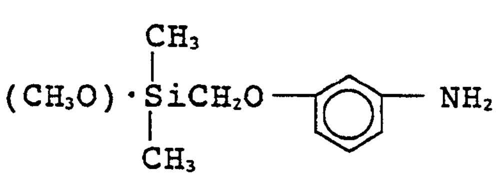
,

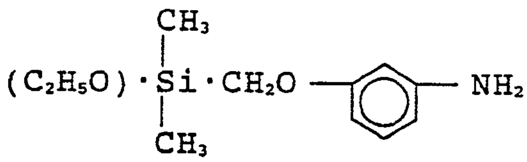 ,

In the practice of the invention, the aminosilicon compounds may be used alone or in admixture of two or more.

Curable resins of formula (I) are obtainable by reacting a polyimide of formula (II) with an aminosilicon compound of formula ( III ) both as defined above, preferably in an organic solvent. Examples of the solvent include N -methyl - 2 - pyrrolidone, dimethylacetamide, dimethylformamide, hexamethylphosphoramide, tetrahydrofuran, 1,4 - dioxane, methyl cellosolve®, ethyl cellosolve® butyl cellosolve® diglyme(diethylene glycol dimethyl ether), diethylene glycol, diethyl ether, acetone, methyl ethyl ketone, methyl isobutyl ketone, cyclopentanone, cyclohexanone, toluene, xylene, and mixtures thereof.

On reaction, the aminosilicon compound of formula ( III ) and the polyimide of formula ( II ) are preferably used in a molar ratio, ( III )/( II ), of from about 1.9 to about 2.1 while the reaction temperature preferably ranges from - 20 °C to 70°C, especially from 0°C to 50°C. The reaction time is generally in the range of from about 1/2 to about 10 hours.

The curable resin of formula (I) according to the invention is most often used as protective coatings for electronic parts, for example, by dissolving the resin in a solvent. To this end, the solvents previously mentioned as the reaction medium may be used alone or in admixture of two or more. The curable resin solution in such a solvent is easy to handle and apply since it is shelf stable and relatively low in viscosity.

The curable resin of formula (I) in a solvent is cured by heating at a temperature of at least 100°C, more preferably at least 150°C for about 1 to about 10 hours, whereby the amic acid moiety in structural formula (I) is imidized with attendant formation of water which, in turn, promotes crosslinking reaction of alkoxysilyl groups. The upper limit of the temperature is preferably 450°C, althougt it is not limited thereto. As a result, the resin cures into a high molecular weight polymer having an imide ring which exhibits improved heat resistance, mechanical properties, electrical properties, adherence to substrates, and solvent resistance.

Curable resins embodying the invention find a wide variety of applications as coatings or films on various substrates, typically semiconductor devices, for example, passivation films and protective films on semiconductor element surface, junction protective films over junctions of diodes and transistors, alpha -radiation shielding films on VLSI, interlayer insulating films, ion implantation masks, conformal coatings on printed circuit boards, orienting films of liquid crystal display elements, glass fiber protective films, and solar battery surface protective films.

There have been described the curable resins that are dissolvable in solvents to form relatively less viscous, shelf stable solutions and that can be cured onto substrates at relative low temperatures of below 300°C to form coatings having excellent heat resistance, mechanical strength, electrical properties, solvent resistance, and adherence. The methods described herein enable easy and efficient preparation of the curable resins.

## EXAMPLES

Examples of the present invention are given below by way of illustration and not by way of limitation.

### Example 1

A flask equipped with a stirrer, thermometer, and nitrogen purge line was charged with 22.2 grams (0.05 mol) of 2,2 - bis(3,4 -benzenedicarboxylic anhydride)perfluoropropane as a tetracarboxylic dianhydride component and 200 grams of N - methyl - 2 - pyrrolidone as a solvent. To the flask was added dropwise 80 grams of a solution of 8.0 grams of diaminodiphenyl ether in N - methyl - 2 -pyrrolidone as a diamine component. At the end of addition, the reaction solution was stirred for 10 hours at room temperature. Then the flask was connected to a reflux condenser having a water collecting container, 30 grams of xylene added to the flask, and the reaction system heated to 160°C and maintained at the temperature for 6 hours. There was collected 1.4 grams of water.

A yellowish brown reaction solution resulting from the procedure was cooled down, poured into methanol for reprecipitation, and then dried, yielding 26.5 grams of a polyimide having the following structural formula.

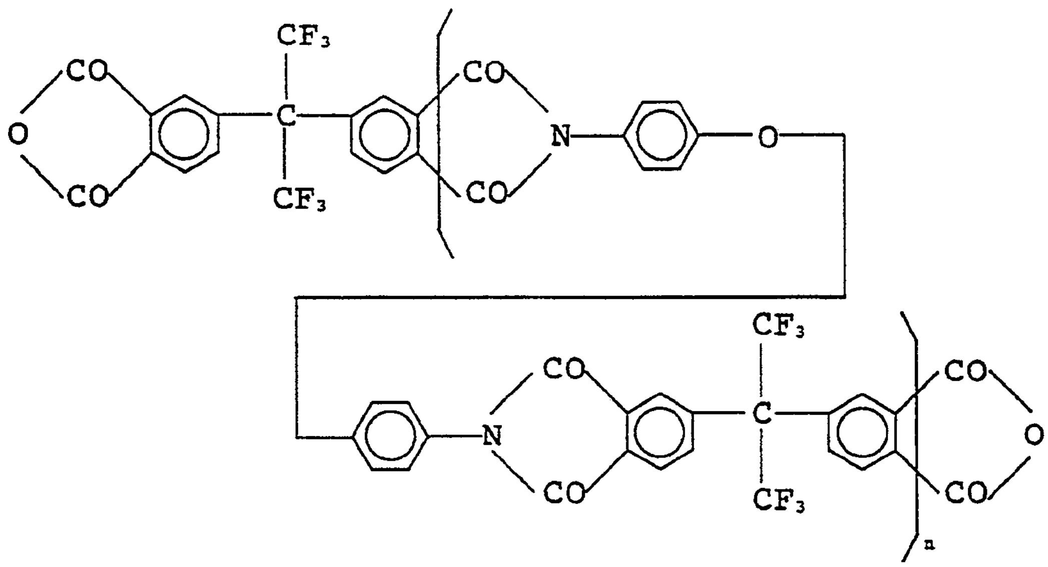

n=4

This polyimide was analyzed by infrared (IR) absorption spectroscopy to find an absorption peak at 1810 $cm^{-1}$ attributable to the acid anhydride bond and peaks at 1770 and 1720 $cm^{-1}$ attributable to the imide bond.

Next, 23.0 grams of the polyimide was dissolved in N - methyl - 2 - pyrrolidone again. To this solution was added 2.9 grams of 3 -aminopropyltrimethoxysilane as an aminosilicon compound. The reaction solution was stirred for 4 hours at room temperature. The reaction solution was poured into methanol, yielding 23.1 grams of a reaction product of the following formula.

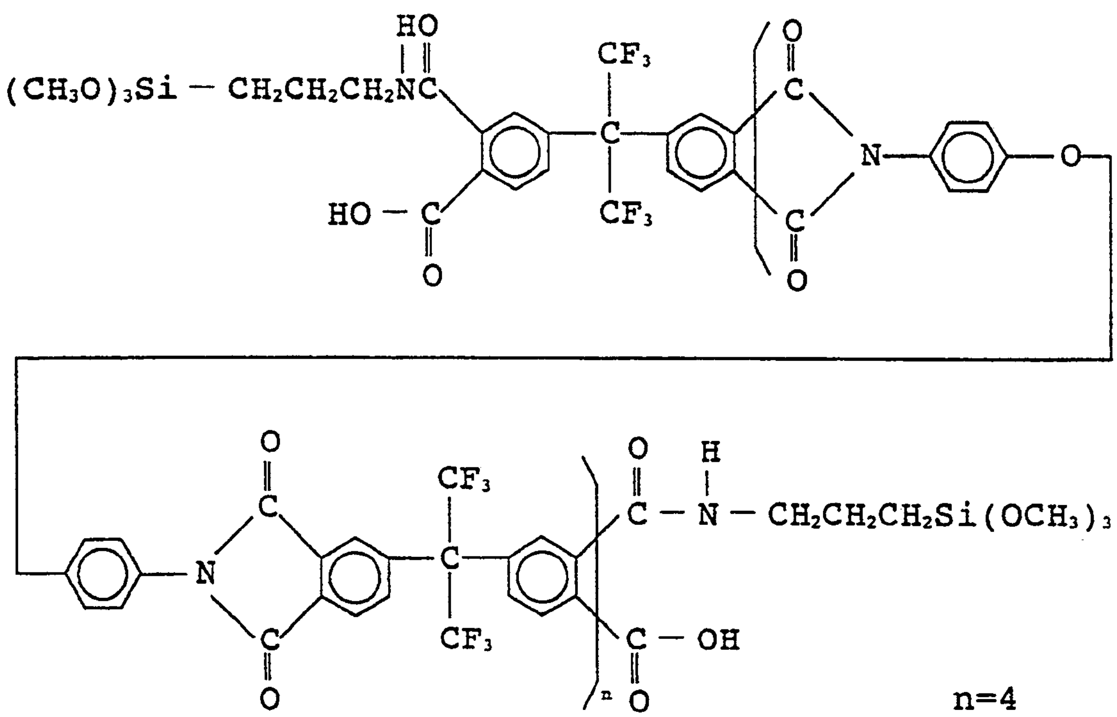

n=4

This product was analyzed for IR spectrum to find the disappearance of the absorption peak at 1810 $cm^{-1}$ attributable to the acid anhydride bond and the appearance of an absorption peak at 1640 $cm^{-1}$ attributable to the amide bond. The product was thus identified to be the end curable resin.

Example 2

According to the procedure of Example 1, 14.1 (0.048 mol) of 3,3',4,4' - biphenyltetra -carboxylic dianhydride as a tetracarboxylic dianhydride component, and 4.9 grams (0.012 mol) of 2,2 - bis[4 - (4 - aminophenoxy)phenyl]propane and 6.0 grams (0.024 mol) of bis(3 -aminopropyl)tetramethyldisiloxane as a diamine component were reacted in N - methyl - 2 -pyrrolidone, obtaining an N - methyl - 2 -pyrrolidone solution of an imide compound.

The following step used the solution without isolation of the imide compound. That is, 5.3 grams of 3 - aminopropyltriethoxysilane as an aminosilicon compound was added to the solution, yielding a desired curable resin of the following formula.

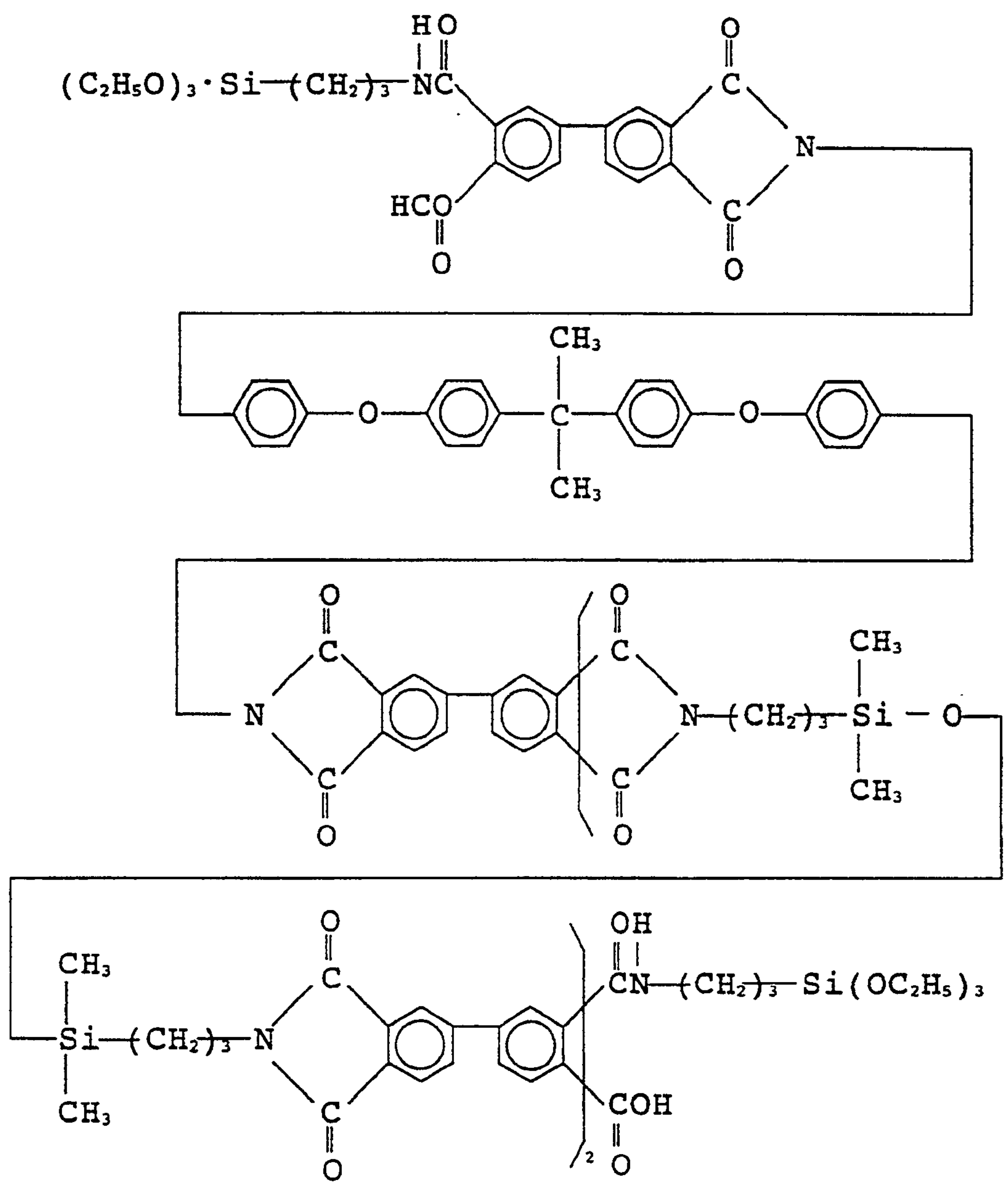

Example 3

The procedure of Example 2 was repeated except that

the tetracarboxylic dianhydride component was a mixture of 5.9 grams (0.02 mol) of 3,3 ',4,4 ' - biphenyltetracarboxylic dianhydride and 17.8 grams (0.04 mol) of 2,2 - bis(3,4 -benzenedicarboxylic anhydride)perfluoropropane,

the diamine component was 20.5 grams (0.05 mol) of 2,2 - bis[4 - (4 - aminophenoxy)phenyl] -propane,
the aminosilicon compound was 4.4 grams (0.02 mol) of 3 - aminopropyltriethoxysilane, and
the solvent was N - methyl - 2 - pyrrolidone. There was obtained a desired curable resin of the following formula.

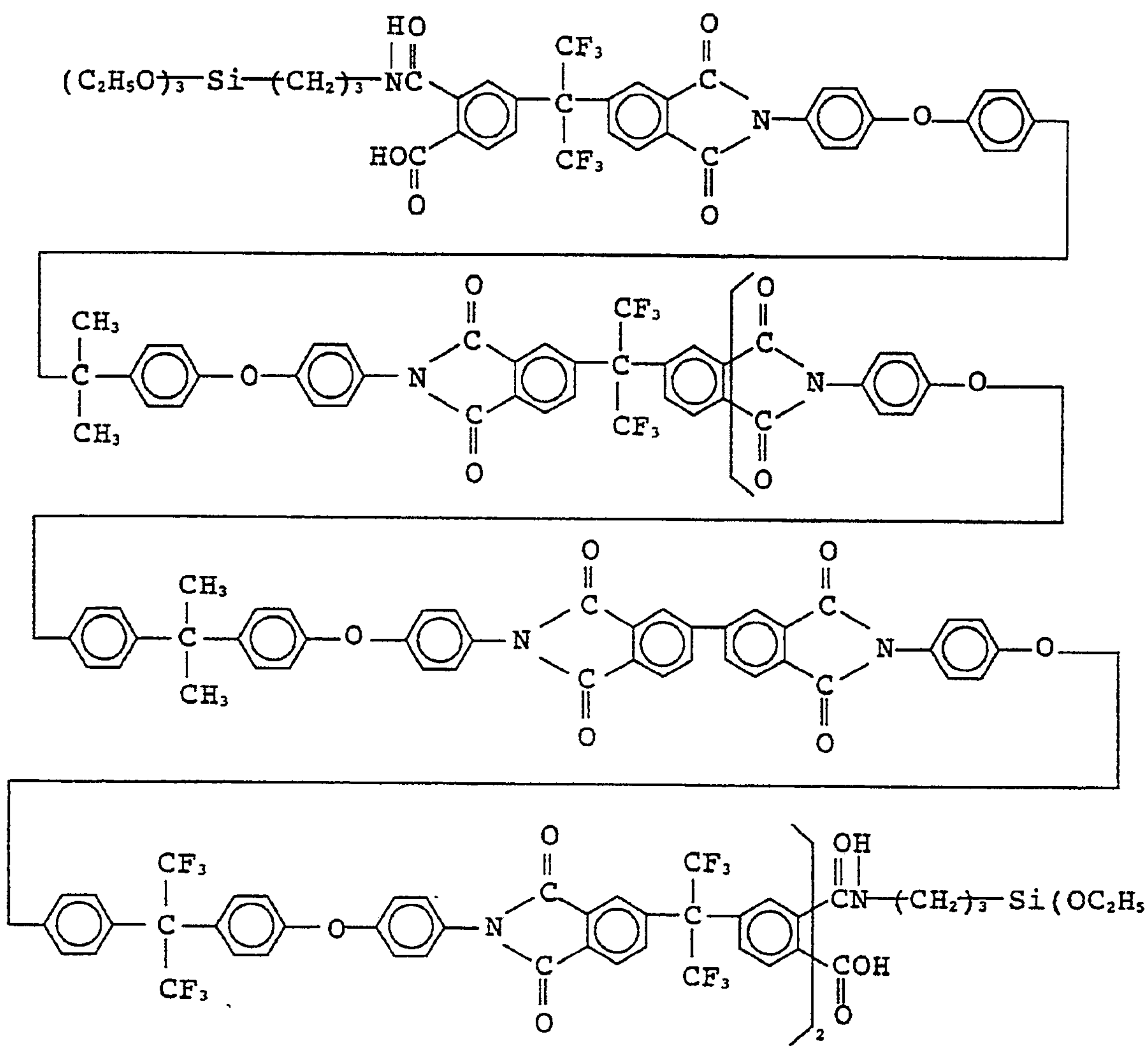

## Example 4

The procedure of Example 2 was repeated except that
the tetracarboxylic dianhydride component was 15.3 grams (0.036 mol) of 1,3 - bis(3,4 -dicarboxyphenyl - 1,1,3,3 - tetramethyldisiloxane dianhydride,
the diamine component was 9.8 grams (0.024 mol) of 2,2 - bis[4 - (4 - aminophenoxy) -phenyl]propane,
the aminosilicon compound was 4.6 grams (0.024 mol) of 3 - aminopropylmethyldiethoxy -silane, and
the solvent was diglyme.
There was obtained a desired curable resin of the following formula.

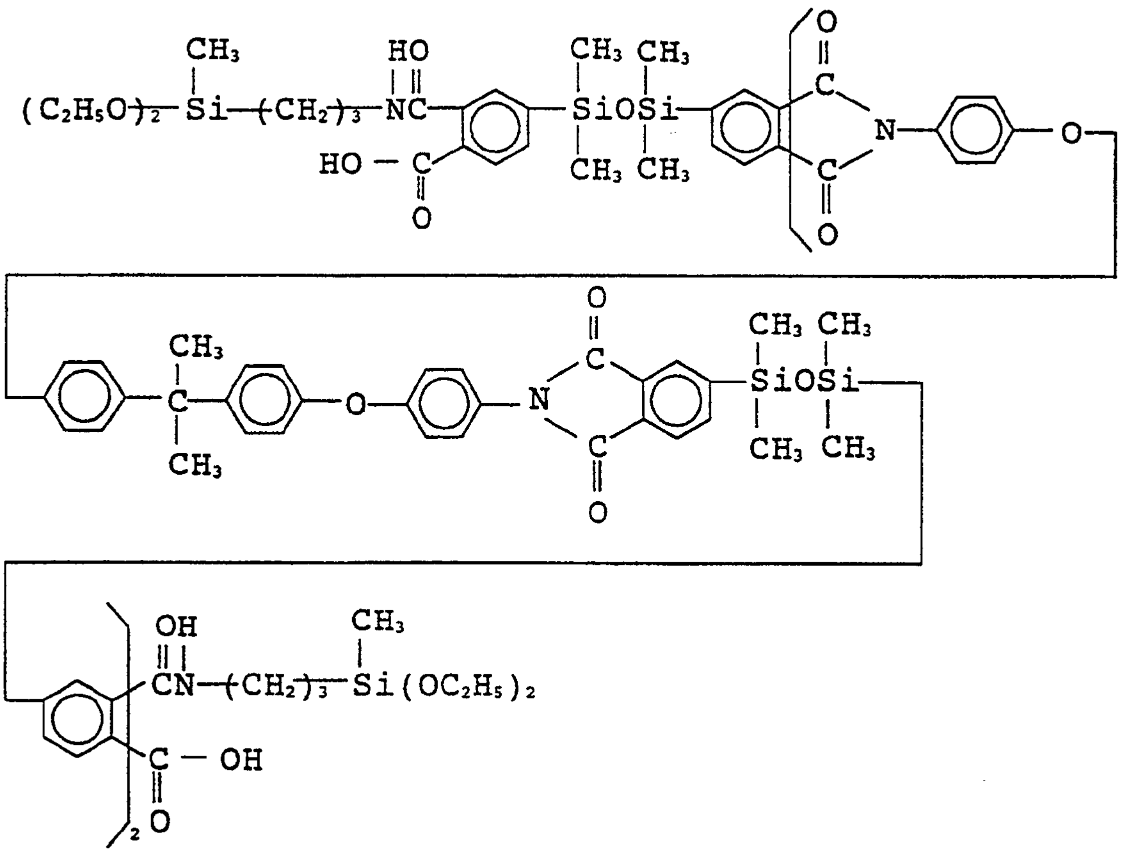

Comparative Example 1

A polyamic acid solution containing an aminosilicon compound was prepared by reacting 16 grams of 3,3 '4,4 ' - benzophenonetetra -carboxylic dianhydride and 10.0 grams of diaminodiphenyl ether in 200 grams of N -methyl - 2 - pyrrolidone at room temperature to form a polyamic acid solution, and adding 0.6 grams of 3 - aminopropyltriethoxysilane to the solution.

Comparative Example 2

A polyamic acid solution was prepared by reacting 14.7 grams of 3,3 ',4,4 ' - biphenyl -tetracarboxylic dianhydride, 12.3grams of 2,2 -bis[4 - (4 - aminophenoxy)phenyl]propane, and 5.0 grams of bis(3 - aminopropyl)tetramethyl -disiloxane in 200 grams of N - methyl - 2 -pyrrolidone.

The N - methyl - 2 - pyrrolidone solutions of the curable resins obtained in Examples 1 - 3, the diglyme solution of the curable resin obtained in Example 4, and the solutions obtained in Comparative Examples 1 - 2 were examined for shelf stability by shelf storing at 5°C for 3 months. Also, the solutions were applied to $SiO_2$ substrates and cured by heating at 150°C for one hour and then at 200°C for one hour. The resulting resin coatings were examined for adherence to the substrates and resistance against N - methyl - 2 - pyrrolidone.

The results are shown in Table 1.

Table 1

| Solvent | | Viscosity*, centistokes | Stability after 3-month storage | Heat cured | |
|---|---|---|---|---|---|
| | | | | Adherence to $SiO_2$ | Solvent resistance |
| Example | | | | | |
| 1 | N-methyl-2-pyrrolidone | 3 | Good | Good | Good |
| 2 | N-methyl-2-pyrrolidone | 4 | Good | Good | Good |
| 3 | N-methyl-2-pyrrolidone | 6 | Good | Good | Good |
| 4 | diglyme | 3 | Good | Good | Good |
| Comparative Example | | | | | |
| 1 | N-methyl-2-pyrrolidone | — | Gel | Good | Good |
| 2 | N-methyl-2-pyrrolidone | — | Good | Good | Dissolved |

*nonvolatile content 10% by weight

As is evident from Table 1, the resins of Examples 1 - 4 form solutions having high shelf stability and are cured through relatively mild heating at about 200°C into coatings which firmly adhere to the underlying substrates and are chemically resistant against organic solvents.

Although some preferred embodiments have been described, many modifications and variations may be made thereto in the light of the above teachings. It is therefore to be understood that within the score of the appended claims, the invention may be practised otherwise than as specifically described.

## Claims

1. A curable resin comprising a resin of the formula (I):

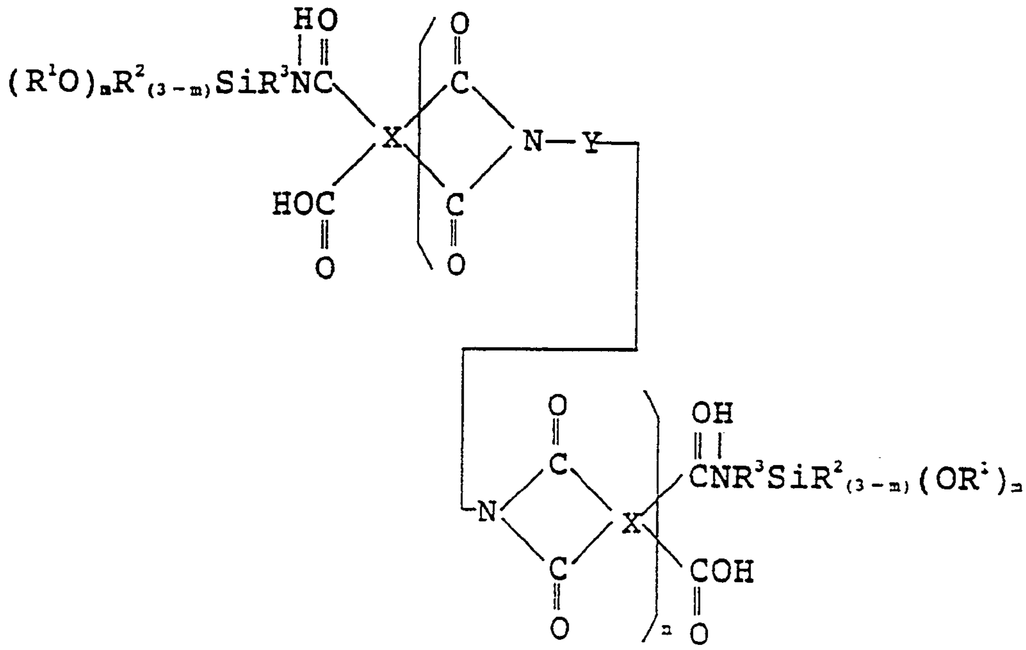

....(I)

wherein $R^1$ and $R^2$ each are a substituted or unsubstituted monovalent hydrocarbon group having 1 to 10 carbon atoms, $R^3$ is a divalent organic group having 1 to 10 carbon atoms, X is a tetravalent organic group having an aromatic ring, Y is a divalent organic group, m is an integer of 1 to 3, and n is an integer of at least 1.

2. A curable resin of claim 1 wherein X is at least one tetravalent organic group selected from:

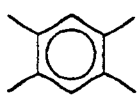 , 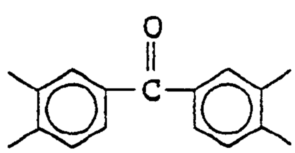 , 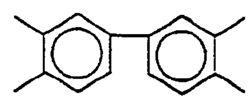 ,

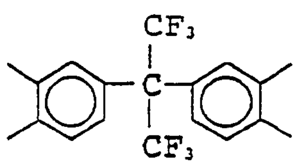 , 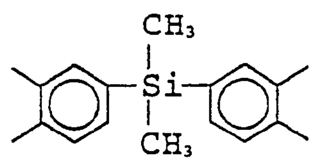 and

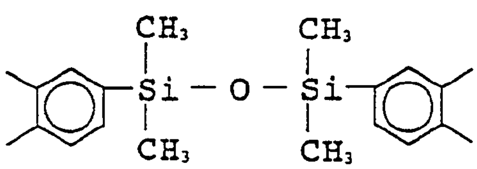 .

3. A resin according to claim 1 or claim 2 in which Y is at least one divalent organic group selected from the group consisting of divalent organic groups having 1 to 4 benzene rings and 6 to 36 carbon atoms, and divalent organic groups having the following formulae (1) and (2):

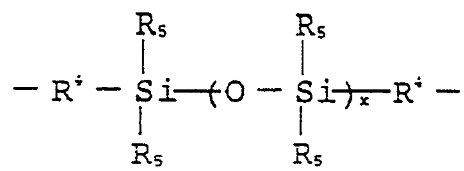

.....(1)

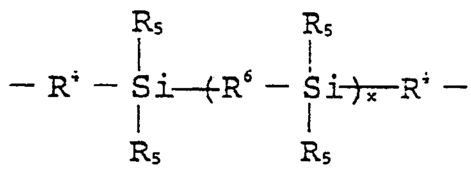

.....(2)

wherein $R^4$ is a divalent organic group having 1 to 10 carbon atoms, $R^5$ is a substituted or unsubstituted monovalent hydrocarbon group having 1 to 10 carbon atoms, $R^6$ is a divalent organic group having 1 to 6 carbon atoms, and x is an integer of 1 to 10.

**4.** A method for preparing a curable resin according to any one of claims 1 to 3, comprising reacting a polyimide of the following structural formula ( II ):

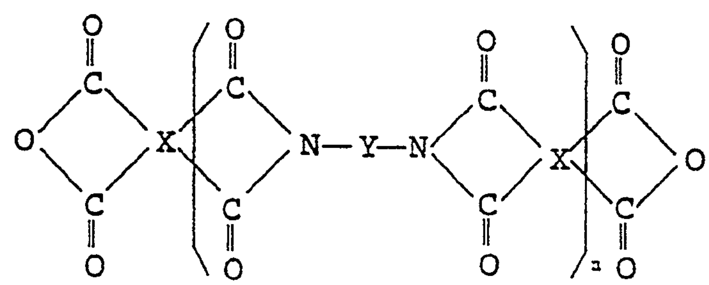

....( II ).

with an aminosilicon compound of the following structural formula ( III ):

$$(R^1O)_m R^2_{(3-m)}SiR^3NH_2 \quad (III)$$

wherein $R^1$, $R^2$, $R^3$, X, Y, m and n are as defined in said any one claim.

**5.** A protective coating for electronic parts, obtained by curing a curable resin as set forth in claim 1,

**6.** A method of providing a protective coating for a component, comprising curing a curable resin in accordance with any one of claims 1 to 3 on said component.

**7.** A method according to claim 6 in which curing is carried out substantially below 300°C.

European Patent Office

# EUROPEAN SEARCH REPORT

Application Number

EP 91 30 2379

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-2200647 (GENERAL ELECTRIC COMPANY)<br>* claims 1-28 *<br>--- | 1-7 | C08G73/10<br>C08G77/42<br>H01B3/30<br>H01L23/29 |
| A | US-A-4609700 (KUNIMUNE ET AL.)<br>* claims 1-25 *<br>--- | 1-7 | |
| A | EP-A-184937 (HITACHI CHEMICAL CO., LTD)<br>* claims 1-7 *<br>----- | 1-7 | |
| | | | TECHNICAL FIELDS SEARCHED (Int. Cl.5 ) |
| | | | C08G<br>H01B |

The present search report has been drawn up for all claims

| Place of search | Date of completion of the search | Examiner |
|---|---|---|
| THE HAGUE | 24 JUNE 1991 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)